# EUROPÄISCHE PATENTSCHRIFT

(11) **EP 4 237 916 B1**
(45) Veröffentlichungstag und Bekanntmachung des Hinweises auf die Patenterteilung: **08.10.2025**
(21) Anmeldenummer: 21801063.5
(22) Anmeldetag: 25.10.2021
(51) Int. Cl.: G05B 19/042, G06F 3/0482

(54) **VERFAHREN ZUR INBETRIEBNAHME EINES STELLANTRIEBS**
METHOD FOR STARTING UP AN ACTUATOR
PROCÉDÉ DE MISE EN SERVICE D'UN MÉCANISME DE COMMANDE

(30) Priorität: 27.10.2020 DE 102020128240
(43) Veröffentlichungstag der Anmeldung: 06.09.2023
(73) Patentinhaber: AUMA Riester GmbH & Co. KG, 79379 Müllheim (DE)
(72) Erfinder: BRUCH, Dennis, 57482 Wenden (DE); MALUS, Peter, 79379 Müllheim (DE); BECHER, Jürgen, 79379 Müllheim (DE)
(74) Vertreter: Mertzlufft-Paufler, Cornelius
(86) Internationale Anmeldenummer: PCT/EP2021/079527
(87) Internationale Veröffentlichungsnummer: WO 2022/090148

(56) Entgegenhaltungen:
- EP-A1- 2 000 875
- DE-A1- 102013 112 140
- ROTORK: "CVQ Series QuickStart Guide Quarter-turn Control Valve Actuator", INTERNET, 22 January 2010 (2010-01-22), XP055879951, Retrieved from the Internet <URL:https://www.fagerberg.dk/Files/Images/Products/RotorkCVA/Manuals/pub042-009-00_0211.pdf> [retrieved on 20220117]

## Beschreibung

Bei Stellantrieben ist es üblich, bei einer ersten Inbetriebnahme die Endpositionen des Ventils in der tatsächlichen Einbausituation einzustellen. Der Antriebsmotor kann dann bei Erreichen der jeweiligen Endlage ausgeschaltet werden. Dadurch kann etwa verhindert werden, dass der Antriebsmotor des Stellantriebs mit vollem Drehmoment in die Endlage fährt und beispielsweise ein angesteuertes Ventil oder ein Getriebe beschädigt.

Die Inbetriebnahme geschieht bisher unter Zuhilfenahme eines Bedienhandbuches, mit dessen Hilfe die zugehörigen Betriebsparameter der Endlagen in die Stellantriebssteuerung eingegeben werden. Dies ist jedoch aufwändig und fehleranfällig.

Die Erfindung stellt sich daher die Aufgabe die Inbetriebnahme eines Stellantriebs zu verbessern.

Die Erfindungsgemäße Aufgabe wird gemäß dem Verfahren in Anspruch 1 gelöst.

Demnach werden Betriebsparameter des Stellantriebs nacheinander in einer interaktiven Menüstruktur abgefragt und eingegeben. In der Menüstruktur ist wenigstens ein Pfad definiert, der die nacheinander abzufragenden Betriebsparameter bestimmt, und eine Quittierung einer Parametereingabe bewirkt einen Sprung entlang des definierten Pfads zur nächsten Parametereingabe.

Durch die interaktive Menüstruktur werden die einzugebenden Betriebsparameter abgefragt. Es muss daher keine aufwändige Programmierung oder Eingabe der Endlage anhand eines Benutzerhandbuchs erfolgen. Dadurch entfällt das sonst notwendige, manuelle Navigieren von einer Parametereingabe zur nächsten Parametereingabe. Dieses erfolgt somit automatisch und ermöglicht eine menügeführte Inbetriebnahme.

Die Menüstruktur kann dabei mehrere Zweige aufweisen, die verschiedene Betriebsparameter abfragen. In einer vorteilhaften Ausführung kann der Pfad mehrere dieser Zweige der Menüstruktur verbinden, so dass ein Sprung auch zwischen den Zweigen erfolgen kann. Demnach ist die Menüstruktur nicht linear, sondern immer durch den Pfad definiert. Der Pfad kann daher zwei Menüpunkte unmittelbar miteinander verbinden, die mehr als einen Schritt voneinander entfernt sind, oder anders ausgedrückt, kann der Pfad zwei Menüpunkte miteinander verbinden, zu denen man in der Menüstruktur nur durch ein Aufsteigen und ein anschließendes Absteigen gelangen könnte.

In einer vorteilhaften Ausführung ist ein Sprung innerhalb des Pfades von der oder einer vorherigen Parametereingabe abhängig. Dadurch kann beispielsweise, wie zuvor beschrieben, von einem ersten Zweig je nach Eingabe in einen zweiten oder dritten Zweig der Menüstruktur gesprungen werden, wobei jedoch nicht der vollständige zweite Zweig abgefragt werden muss. Dadurch können beispielsweise alternative Eingabemöglichkeiten für einen Betriebsparameter definiert werden.

In einem Beispiel könnte somit zunächst eine Art der Parametervorgabe abgefragt werden, beispielsweise ob beide Endlagen, eine untere Endlage und ein Hub oder eine obere Endlage und ein Hub eingegeben werden sollen. Je nach Auswahl der drei Eingabemöglichkeiten, wird ein Pfad generiert, der die passenden Menüeinträge der benötigten Betriebsparametereingaben miteinander verbindet. Diese können in diesem Fall auch in verschiedenen Zweigen der Menüstruktur liegen.

In einer Ausführung ist ein Betriebsparameter eine Endlage oder ein Hub, welche bzw. welcher direkt eingegeben werden kann. Alternativ kann auch eine Endlage aus einem eingegebenen Betriebsparameter berechnet werden. Beispielsweise kann nach der Eingabe der unteren oder oberen Endlage und nach Eingabe des Hubs in Anzahl Umdrehungen daraus die jeweils andere Endlage berechnet werden. Auf diese Weise ist eine flexiblere Konfiguration des Stellantriebs möglich. So kann es Einsatzgebiete geben, bei denen der Abstand zwischen zwei Endlagen durch einen festen Hub definiert ist. Bis zum heutigen Stand der Technik musste die Umrechnung dafür vor der Einstellung der Endlagen manuell erfolgen. Die Erfindung ermöglicht hier eine einfachere, schnellere und sicherere Eingabe. Denn die Umrechnung kann automatisch ein Getriebe und andere Einflussfaktoren berücksichtigen, so dass eine Fehleingabe sicher vermieden wird.

Die Betriebsparameter können als Zahlenwerte eingegeben werden, beispielsweise über Taster oder Schalter.

Eine Parametereingabe erfolgt dadurch, dass der Stellantrieb in eine Endlage bewegt wird. Dabei wird der Antriebsmotor des Stellantriebs tatsächlich in die einzustellende Endlage bewegt und diese Position als Betriebsparametereingabe gesetzt. Der Stellantrieb kann dabei beispielsweise manuell über ein Handrad oder elektrisch, wobei der Antriebsmotor etwa über Taster oder Schalter angesteuert wird, bewegt werden. Es kann auch eine automatisierte Bewegung in eine Endlage erfolgen, wobei die Endlage beispielsweise über ein vordefiniertes Abschaltmoment erkannt wird.

Innerhalb eines Pfades wird wenigstens ein Wechsel eines Betriebsmodus erzwungen. Auf diese Weise kann beispielsweise eine bestimmte Art einer Parametereingabe erzwungen werden, beispielsweise die zuvor beschriebene manuelle Bewegung des Stellantriebs.

Beispielsweise kann der Wechsel des Betriebsmodus von einem Modus, in dem eine Parametrierung möglich ist, in einen Modus, in dem ein Verfahren des Stellantriebs möglich ist, erfolgen.

Dabei ist vorgesehen, dass ein Sprung innerhalb des vorgegebenen Pfades nur ausgeführt wird, wenn der vorgegebene Wechsel des Betriebszustands tatsächlich ausgeführt wird. Hierzu ist ein Betriebsmoduswahlschalter vorgesehen.

Der Wechsel des Betriebsmodus erfolgt manuell durch den Benutzer.

Der Stellantrieb weist wenigstens zwei Betriebsmodi auf, wobei in einem ersten Betriebsmodus eine manuelle Bewegung des Stellantriebs möglich ist und in einem zweiten Betriebsmodus eine Parametereingabe möglich ist. Auf diese Weise kann verhindert werden, dass der Stellantrieb während der Parametereingabe bewegt wird. Andererseits ist dadurch auch eine Parametereingabe durch Bewegen des Stellantriebs möglich, wie oben beschrieben.

In einer vorteilhaften Ausführung wird die Differenz zwischen zwei Endlagen als Anzahl von Umdrehungen oder zu einer Endlage und einem Hub die zugehörige zweite Endlage berechnet. Dies erleichtert die Verifikation, ob die jeweiligen Daten plausibel sind, und erleichtert auch das Anfahren von beispielsweise weit entfernten Endlagen.

Die Anzahl an Umdrehungen kann sich dabei auf die Abtriebswelle des Stellantriebs beziehen.

Hierzu kann es vorteilhaft sein, wenn die Anzahl der Inkremente eines Inkrementalwertgebers des Antriebsmotors und/oder das Übersetzungsverhältnis des Getriebes bekannt sind. Diese Werte können als vorgegebene Werte hinterlegt sein, oder zuvor innerhalb der Menüstruktur abgefragt worden sein. Letzteres hat den Vorteil, dass die menügesteuerte Parametereingabe ohne Anpassungen an jedem Stellantrieb verwendet werden kann.

In einer besonders vorteilhaften Ausführung wird eine Plausibilitätsbetrachtung der eingegebenen Betriebsparameter durchgeführt. Auf diese Weise kann eine Fehlbedienung und eine fehlerhafte Inbetriebnahme ausgeschlossen werden.

Bei der Plausibilitätsbetrachtung kann beispielsweise überprüft werden, ob die Endlagen ungleich sind und ob eine Differenz der Endlagen eine maximale Anzahl an Inkrementen oder Umdrehungen nicht überschreitet. Insbesondere kann so verhindert werden, dass der Stellantrieb über seine physikalischen Grenzen belastet wird.

In einer vorteilhaften Ausführung wird, insbesondere nach Beenden der Parametereingabe, eine Testfahrt mit den eingegeben Betriebsparametern durchgeführt. Auf diese Weise kann festgestellt werden, ob der Stellantrieb in der gewünschten Weise funktioniert.

In einer besonders vorteilhaften Ausführung werden während der Testfahrt auftretende Drehmomente aufgezeichnet und als Referenzwerte gespeichert. Diese Referenzwerte können verwendet werden, um zu einem späteren Zeitpunkt beispielsweise eine Alterung einer am Stellantrieb angeschlossenen Armatur feststellen zu können.

Die Erfindung ist nachfolgend anhand eines Ausführungsbeispiels mit Bezug auf die beiliegenden Zeichnungen näher erläutert.

Es zeigt:
- Fig. 1:: ein Blockschaltbild eines Stellantriebs,
- Fig. 2a:: eine Bedieneinheit des Stellantriebs der Fig. 1,
- Fig. 2b:: der Betriebsmoduswahlschalter der Fig. 2a in der Stellung "Aus",
- Fig. 3 - 5:: eine beispielhafte interaktive Menüstruktur zur Inbetriebnahme eines Stellantriebs mit mehreren verzweigten oder alternativen Pfaden.

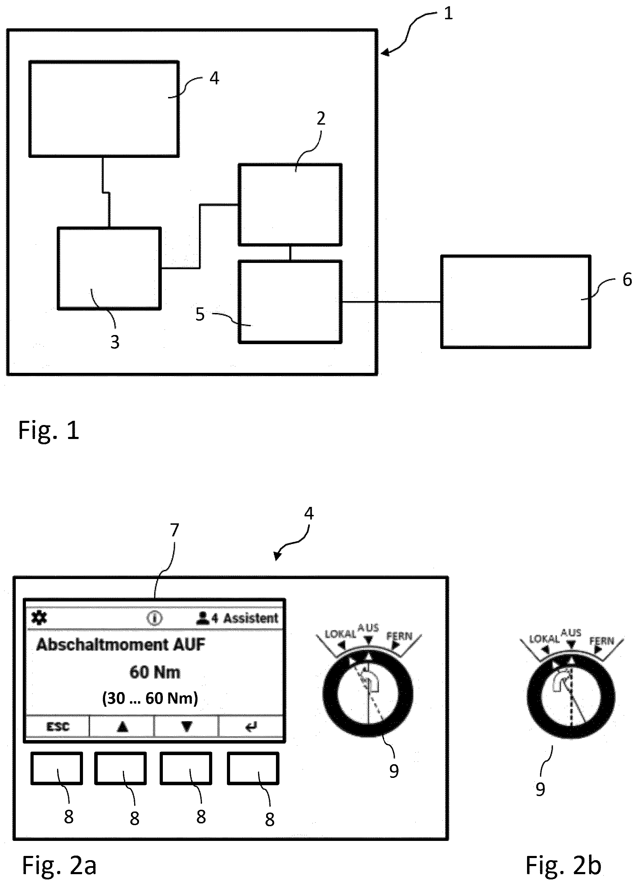

Die Fig. 1 zeigt ein Blockschaltbild eines Stellantriebs 1. Der Stellantrieb weist einen elektrischen Antriebsmotor 2 und eine Steuereinheit 3 zur Ansteuerung des Antriebsmotors 2. Die Steuereinheit 3 ist mit einer Bedieneinheit 4 verbunden, über die die Steuereinheit von einem Benutzer bedienbar ist.

Der Antriebsmotor 2 ist mit einem Getriebe 5 verbunden. An dem Getriebe 5 ist ein Stellglied 6, nämlich eine Armatur oder ein Ventil angebunden. Solche Stellantriebe sind im Stand der Technik hinlänglich bekannt, weshalb hier nicht auf Weitere Einzelheiten eingegangen wird.

Die Fig. 2a zeigt beispielhaft eine Bedieneinheit 4 des Stellantriebs. Die Bedieneinheit 4 besitzt einen Bildschirm 7 zur grafischen Darstellung von Informationen und zur interaktiven Inbetriebnahme gemäß einem erfindungsgemäßen Verfahren. Unter dem Bildschirm sind beispielhaft vier Tasten 8 angeordnet, deren Funktion variabel ist. Anstelle der vier Tasten 8 können auch andere Eingabemittel vorhanden sein, wie zum Beispiel Dreh- oder Wippschalter oder -taster. Beispielsweise kann eine Drehbedienung mit zwei koaxialen, verbundenen Drehschaltern verwendet werden, deren Drehung magnetisch erfasst wird.

Zusätzlich weist die Bedieneinheit 4 einen Betriebsmoduswahlschalter 9 auf, der im Beispiel drei verschiedene Betriebsmodi unterstützt.

Der dargestellte Betriebsmodus "Lokal" ermöglicht eine Bedienung des Antriebsmotors 2 über die Bedieneinheit 4, etwa über die Tasten 8 oder automatisiert. Dadurch kann der Antriebsmotor 2 per Tastendruck auf- oder zugefahren werden. Eine Parametrierung ist jetzt nicht möglich.

Im Betriebsmodus "Aus" (Fig. 2b) ist der Antriebsmotor 2 deaktiviert. Eine Bewegung des Antriebsmotors ist in diesem Betriebsmodus nicht möglich. In diesem Betriebsmodus sind beispielsweise Parametereingaben möglich.

Der Betriebsmodus "Fern" stellt den Normalbetrieb dar, in dem der Antriebsmotor beispielsweise über eine Leitwarte fernsteuerbar ist. Eine Parametrierung ist jetzt nicht möglich.

Diese drei Betriebsmodi können auch anders bezeichnet sein. Es können auch weniger oder mehr Betriebsmodi vorhanden sein.

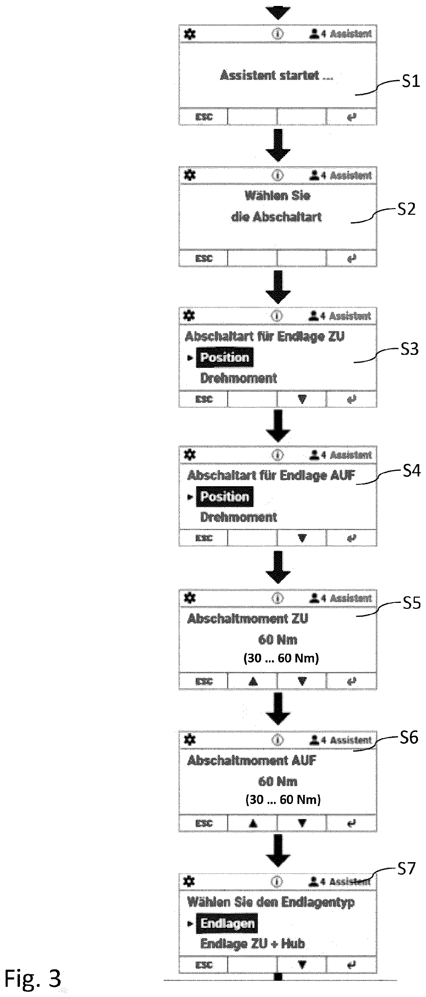

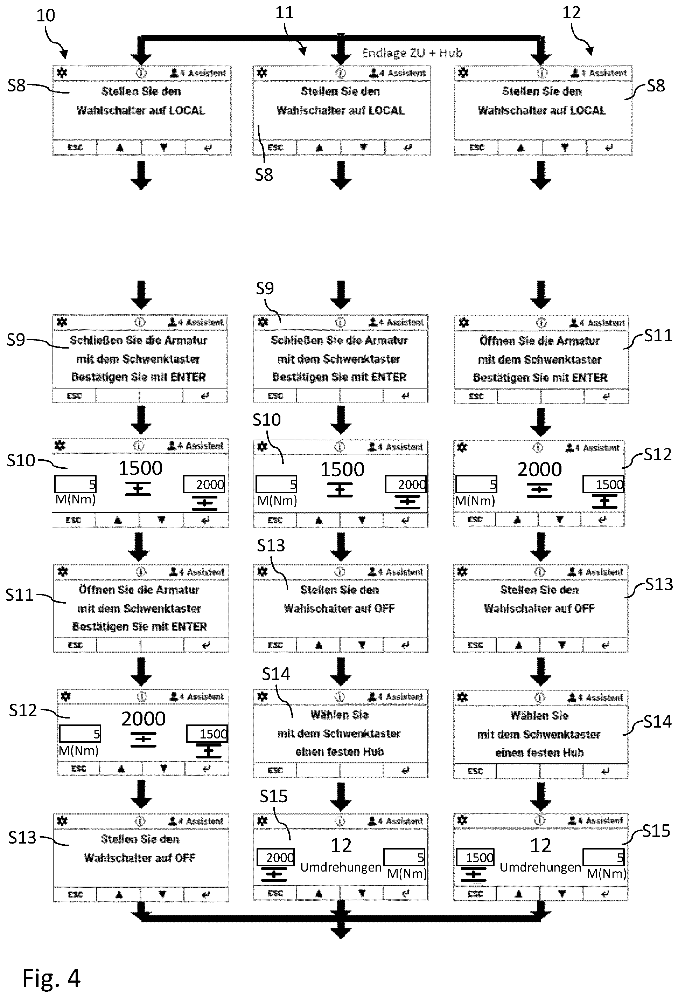

Die Figuren 3 - 5 zeigen eine beispielhafte interaktive Menüstruktur zur Inbetriebnahme eines Stellantriebs.

Die interaktive Menüstruktur zur Inbetriebnahme wird beispielsweise beim ersten Einschalten oder durch Anwahl eines Inbetriebnahme-Assistenten gestartet S1. Die interaktive Menüstruktur enthält im Beispiel wenigstens einen Pfad, der die nacheinander abzufragenden Betriebsparameter bestimmt. Ein Sprung entlang des definierten Pfads zur nächsten Parametereingabe erfolgt nur nach Quittierung einer Parametereingabe.

Die im Beispiel gezeigte interaktive Menüstruktur verwendet einen Bildschirm 7 der Bedieneinheit 4 zur grafischen Darstellung der abgefragten und eingegebenen Betriebsparameter. Dabei wird auf einer dargestellten Bildschirmseite jeweils nur ein Betriebsparameter abgefragt. Auf diese Weise können auch auf kleinen Bildschirmen eine übersichtliche Darstellung und Eingabe erfolgen. Der Benutzer wird interaktiv durch die Inbetriebnahme geführt, wobei er nach Quittierung immer genau den nächsten erforderlichen Betriebsparameter zur Eingabe angezeigt bekommt.

Die interaktive Menüstruktur ist in Bildschirmseiten organisiert. Jede dieser Bildschirmseiten entspricht einer Parametereingabe, wobei auch Hinweisseiten vorhanden sein können, die keine Parametereingabe enthalten, sondern nur Text darstellen. Alle Bildschirmseiten müssen jedoch quittiert werden, um zur nächsten Bildschirmseite zu gelangen.

Der Pfad verbindet demnach bestimmte Bildschirmseiten und definiert somit die Reihenfolge der nacheinander angezeigten Bildschirmseiten. Der Pfad kann dabei auch Bildschirmseiten miteinander verbinden, die beispielsweise in verschiedenen Zweigen liegen. Es kann dadurch eine nichtlineare Abfolge oder eine Abfolge, die nicht durch die Menüstruktur vorgegeben ist, von Bildschirmseiten festgelegt werden.

Der Pfad kann auch Verzweigungen enthalten, wobei abhängig von einer Parametereingabe der weitere Verlauf des Pfads verändert wird.

Im Beispiel erfolgt zunächst ein Hinweis S2 auf die nachfolgende Wahl der Abschaltart. Nach dem Quittieren dieses Bildschirms folgt die Wahl der Abschaltart bei Endlage ZU, S3. Hier steht im Beispiel zur Wahl Position und Drehmoment. Wobei bei anderen Stellantrieben weitere oder andere Abschaltarten vorhanden sein können.

Anschließend erfolgt die Wahl der Abschaltart bei Endlage AUF, S4.

Anschließend erfolgt die Parametereingabe des Abschaltmoments ZU, S5, und des Abschaltmoments AUF, S6.

Anschließend erfolgt die Wahl S7 auf welche Weise die beiden Endlagen eingegeben werden sollen. Es können beide Endlagen eingegeben werden. Es kann die Endlage ZU und ein Hub des Antriebsmotors oder die Endlage AUF und der Hub eingegeben werden. Je nach Wahl führt der Pfad in einen unterschiedlichen Zweig der Menüstruktur.

Die Fig. 2 zeigt diese alternativen Zweige und die zugehörigen Pfade. Der erste Pfad 10, im Bild links, fragt beide Endlagen ab. Im darauffolgenden Schritt S8 wird zunächst ein Wechsel des Betriebsmodus erzwungen. Dazu ist ein Betriebsmoduswahlschalter 9 gemäß der Fig. 2a vorhanden. Es muss zunächst auf den Betriebsmodus "Lokal", wie etwa in Fig. 2b dargestellt, gewechselt werden. Im Betriebsmodus "Lokal" ist, wie zu Fig. 2a beschrieben, eine manuelle Ansteuerung des Antriebsmotors über die Bedieneinheit 4 möglich. Das Umschalten des Betriebsmoduswahlschalters 9 quittiert diesen Bildschirm.

Es folgt ein Hinweis S9, dass der Antriebsmotor über Tasten 8 geschlossen werden soll. Anschließend wird der Stellantrieb über die Tasten 8 geschlossen, S10. Die angefahrene Endlage wird als Betriebsparameter gesetzt.

Es folgt ein Hinweis S11, dass der Antriebsmotor über Tasten 8 geöffnet werden soll. Anschließend wird der Stellantrieb über die Tasten 8 geöffnet, S12. Die angefahrene Endlage wird als Betriebsparameter gesetzt.

Der zweite Pfad 11, im Bild in der Mitte, umfasst die Eingabe der Endlage ZU und einen festen Hub des Antriebsmotors. Die Schritte S8 bis S10 entsprechen dem ersten Pfad 10. Dabei können die zugehörigen Bildschirme tatsächlich nur einmal in der Menüstruktur vorhanden sein. Der Pfad verbindet dann die entsprechenden Bildschirme über die Zweige hinweg, so dass nur die benötigten Bildschirme angezeigt und abgefragt werden. Solche identischen Bildschirme sind im Folgenden jeweils mit gleichen Bezugsziffern versehen.

Nach der Eingabe der Position muss zunächst der Betriebsmodus auf "Aus" gewechselt werden, in dem der Betriebsmoduswahlschalter 9 in die entsprechende Stellung bewegt wird (Fig. 2b), S13. Es folgt ein Hinweis S14 auf die Eingabe des Hubs und die Eingabe des Hubwertes selbst, S15, über die Tasten 8.

Der dritte Pfad 12, im Bild rechts, umfasst die Eingabe der Endlage AUF und einen festen Hub des Antriebsmotors. Nachdem der Betriebsmodus in S8 auf "Lokal" gewechselt wurde, wird nun auf das Öffnen des Stellantriebs hingewiesen, S11 und anschließend der Stellantrieb über die Tasten 8 geöffnet, S12. Es folgen die Schritte S13 bis S15 des zweiten Pfads.

Im zweiten und dritten Pfad wird aus der eingegebenen Endlage und dem Hub die fehlende Endlage berechnet. Dabei kann der Hub zunächst in Umdrehungen oder Inkremente eines Drehwertgebers umgerechnet werden.

Prinzipiell kann nach jeder Eingabe eine Plausibilitätsbetrachtung durchgeführt werden, so dass eine falsche Eingabe unmöglich ist. Falls ein ungültiger Wert festgestellt wird, kann die Quittierung verweigert werden, so dass nicht zur nächsten Parametereingabe gesprungen werden kann. Dabei kann der fehlerhafte Wert im Bildschirm hervorgehoben werden oder eine andere Fehlermeldung angezeigt werden.

Beispielsweise dürfen die beiden Endlagen nicht gleich sein und auch nicht weiter entfernt voneinander liegen, als die maximale Zahl der Inkremente, die durch ein vollständiges Verfahren des Stellantriebs erreichbar sind.

Im vorliegenden Beispiel wird bei Einstellung des ersten Positionswerts der jeweilige Wert des Inkrementalwertgebers verzeichnet. Anschließend wird die Zahl der Inkremente gezählt wird, bis der zweite Stellenwert erreicht ist. Wird hierbei die maximale Zahl von Inkrementen überschritten, die bei einem Wert über 65.000 (z.B. 2¹⁶) liegen kann, so beginnt die Zählung von null. Die Differenz der Positionswerte darf daher nicht größer als dieser Wert sein.

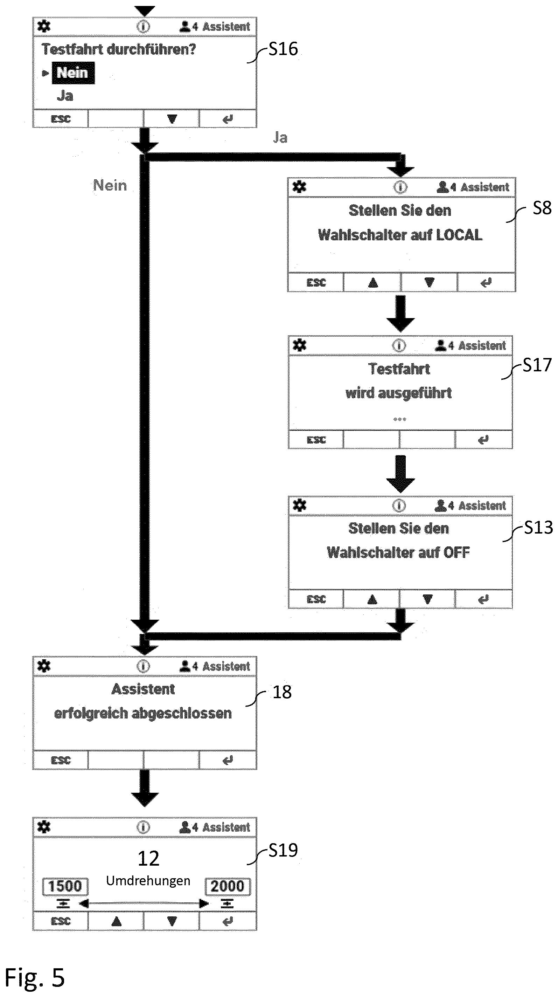

Damit ist die Parametereingabe abgeschlossen. Fig. 5 zeigt den weiteren Verlauf der interaktiven Menüstruktur. In einem Schritt S16 kann ausgewählt werden, ob eine Testfahrt mit den eingegebenen Betriebsparametern durchgeführt werden soll.

Falls ja wird zunächst in S8 der Betriebsmodus auf "Lokal" umgeschaltet, und anschließend eine Testfahrt durchgeführt, S17. Dabei können Positionen und/oder Drehmomente als Referenzwerte gespeichert werden, so dass diese für spätere Vergleichszwecke vorhanden sind. Nach dem Ende der Testfahrt wird der Betriebsmodus wieder auf "Aus" geschaltet, S13.

Anschließend und wenn keine Testfahrt gewünscht war, erfolgt ein Hinweis S18, dass die Inbetriebnahme abgeschlossen ist. Darauf werden die eingestellten Betriebsparameter nochmals in einer Übersicht S19 dargestellt.

Die hier gezeigte Menüstruktur ist dabei nur exemplarisch. Es können je nach Anwendung andere oder weitere Betriebsparameter abgefragt und eingegeben werden.

Abweichend von Fig. 1 muss die Bedieneinheit 4 nicht zwangsläufig in oder an dem Stellantrieb 1 angeordnet oder mit diesem verbunden sein. Die Bedieneinheit 4 kann auch als App beispielsweise auf einem Smartphone, einem Tablet oder einem Notebook ausgeführt sein.

Auf diese Weise ist es etwa möglich, den Stellantrieb 1 ohne Bedieneinheit 4, insbesondere jedoch ohne Bildschirm 7, auszubilden, wodurch Kosten gespart werden können. Dabei kann der Betriebsmoduswahlschalter 9 dennoch physikalisch am Stellantrieb 1 angeordnet sein, so dass eine Fehlbedienung über eine App ausgeschlossen ist.

### Bezugszeichenliste

- 1: Stellantrieb
- 2: Antriebsmotor
- 3: Steuereinheit
- 4: Bedieneinheit
- 5: Getriebe
- 6: Stellglied/Armatur/Ventil
- 7: Bildschirm
- 8: Taste
- 9: Betriebsmoduswahlschalter
- 10: erster Pfad
- 11: zweiter Pfad
- 12: dritter Pfad
- S1: Hinweis "Assistent startet"
- S2: Hinweis "Abschaltart wählen"
- S3: Eingabe Abschaltart Endlage ZU
- S4: Eingabe Abschaltart Endlage AUF
- S5: Eingabe Abschaltmoment ZU
- S6: Eingabe Abschaltmoment AUF
- S7: Eingabe "Endlagentyp"
- S8: Betriebsmoduswahl "Lokal"
- S9: Hinweis "Armatur schließen"
- S10: Eingabe durch Anfahrt Position Endlage ZU
- S11: Hinweis "Armatur öffnen"
- S12: Eingabe durch Anfahrt Position Endlage AUF
- S13: Betriebsmoduswahl "Aus"
- S14: Hinweis "Hub eingeben"
- S15: Eingabe Hub
- S16: Eingabe "Testfahrt ausführen"
- S17: Testfahrt ausführen
- S18: Hinweis "Eingabe abgeschlossen"
- S19: Hinweis "Übersicht"

## Patentansprüche

1. Verfahren zur Inbetriebnahme eines Stellantriebs (1) für ein Ventil oder eine Armatur,
wobei der Stellantrieb (1) eine Bedieneinheit (4) aufweist,
wobei die Bedieneinheit (4) wenigstens einen Betriebsmoduswahlschalter (9) und einen Bildschirm (7) aufweist,
wobei Betriebsparameter des Stellantriebs (1) nacheinander in einer interaktiven Menüstruktur abgefragt und eingegeben werden,
wobei die interaktive Menüstruktur in Bildschirmseiten organisiert ist,
wobei in der Menüstruktur wenigstens ein Pfad definiert ist, der die nacheinander abzufragenden Betriebsparameter bestimmt,
wobei eine Quittierung einer Parametereingabe einen Sprung entlang des definierten Pfads zur nächsten Parametereingabe bewirkt,
wobei der Stellantrieb (1) wenigstens zwei Betriebsmodi aufweist, wobei ein Wechsel des Betriebsmodus durch einen Benutzer mittels des Betriebsmoduswahlschalters erfolgt,
wobei in einem erstem Betriebsmodus eine manuelle Bewegung des Stellantriebs möglich ist und in einem zweiten Betriebsmodus eine Parametereingabe möglich ist,
wobei innerhalb eines Pfades wenigstens ein manueller Wechsel in den ersten Betriebsmodus (S8, S13) erzwungen wird,
wobei ein Sprung innerhalb des vorgegebenen Pfades nur ausgeführt wird, wenn der vorgegebene Wechsel des Betriebsmodus (S8, S13) tatsächlich ausgeführt wird,
wobei ein Umschalten des Betriebsmoduswahlschalters eine Bildschirmseite quittiert, die den Wechsel in den ersten Betriebsmodus erzwingt, und
wobei im ersten Betriebsmodus der Stellantrieb in eine Endlage bewegt wird und diese Position als Parametereingabe gesetzt wird.

2. Verfahren nach Anspruch 1, **dadurch gekennzeichnet,**
**dass** ein Sprung innerhalb des Pfades von der oder einer vorherigen Parametereingabe abhängig ist.

3. Verfahren nach Anspruch 1 oder 2, **dadurch gekennzeichnet, dass** ein Betriebsparameter ein Drehmoment ist und/oder dass eine Endlage aus einem eingegebenen Betriebsparameter berechnet wird.

4. Verfahren nach einem der vorhergehenden Ansprüche, **dadurch gekennzeichnet,**
**dass** zu einer Differenz von zwei Endlagen eine zugehörige Anzahl von Umdrehungen oder zu einer Endlage und einer Anzahl von Umdrehungen die zugehörige zweite Endlage berechnet wird.

5. Verfahren nach einem der vorhergehenden Ansprüche, **dadurch gekennzeichnet,**
**dass** eine Plausibilitätsbetrachtung der eingegebenen Betriebsparameter durchgeführt wird, insbesondere wobei überprüft wird, ob die Endlagen ungleich sind und ob die oder eine Differenz der Endlagen eine maximale Anzahl an Inkrementen nicht überschreitet.

6. Verfahren nach einem der vorhergehenden Ansprüche, **dadurch gekennzeichnet,**
**dass** eine Testfahrt (S17) mit den eingegeben Betriebsparametern durchgeführt wird, insbesondere wobei auftretenden Drehmomente aufgezeichnet und als Referenzwerte gespeichert werden.

7. Stellantrieb (1) mit einem Antriebsmotor (2) und einer Bedieneinheit (4), **dadurch gekennzeichnet, dass** die Bedieneinheit (4) wenigstens einen Betriebsmoduswahlschalter (9), einen Bildschirm (7) und Tasten (8) zur Parametereingabe aufweist, wobei der Stellantrieb (1), insbesondere eine Steuereinheit (3), zur Ausführung eines Verfahrens nach einem der vorgenannten Ansprüche eingerichtet ist.

## Claims

1. Method for commissioning an actuator (1) for a valve or a fitting, wherein the actuator (1) has an operating unit (4), wherein the operating unit (4) has at least one operating mode selector switch (9) and a screen (7), wherein operating parameters of the actuator (1) are queried and entered one after the other in an interactive menu structure, wherein the interactive menu structure is organized in screen pages, wherein at least one path is defined in the menu structure, which determines the operating parameters to be queried one after the other, wherein an acknowledgment of a parameter entry causes a jump along the defined path to the next parameter entry, wherein the actuator (1) has at least two operating modes, wherein a change of the operating mode is effected by a user by means of the operating mode selector switch, wherein in a first operating mode a manual movement of the actuator is possible and in a second operating mode a parameter input is possible, wherein within a path at least one manual change to the first operating mode (S8, S13) is enforced, wherein a jump within the predetermined path is only executed if the predetermined change of the operating mode (S8, S13) is actually executed, wherein switching the operating mode selector switch acknowledges a screen page that forces the change to the first operating mode, and wherein in the first operating mode the actuator is moved to an end position and this position is set as the parameter input.

2. Method according to claim 1, **characterized in that** a jump within the path depends on the or a previous parameter input.

3. Method according to claim 1 or 2, **characterized in that** an operating parameter is a torque and/or **in that** an end position is calculated from an input operating parameter.

4. Method according to one of the preceding claims,
**characterized in that** an associated number of revolutions is calculated for a difference of two end positions, or the associated second end position is calculated for an end position and a number of revolutions.

5. Method according to one of the preceding claims,
**characterized in that** a plausibility check of the input operating parameters is carried out, in particular wherein it is checked whether the end positions are unequal and whether the or a difference of the end positions does not exceed a maximum number of increments.

6. Method according to one of the preceding claims,
**characterized in that** a test run (S17) is carried out with the input operating parameters, in particular wherein occurring torques are recorded and stored as reference values.

7. Actuator (1) having a drive motor (2) and an operating unit (4), **characterized in that** the operating unit (4) has at least one operating mode selector switch (9), a screen (7) and keys (8) for parameter input, wherein the actuator (1), in particular a control unit (3), is set up to carry out a method according to one of the preceding claims.

## Revendications

1. Procédé de mise en service d'un mécanisme de commande (1) pour une vanne ou un robinet, le mécanisme de commande (1) présentant une unité de contrôle (4), l'unité de contrôle (4) présentant au moins un sélecteur de mode de fonctionnement (9) et un écran (7), des paramètres de fonctionnement du mécanisme de commande (1) étant appelés et entrés les uns après les autres dans une structure de menu interactive, la structure de menu interactive étant organisée en pages d'écran, au moins un chemin étant défini dans la structure de menu, lequel détermine les paramètres de fonctionnement à appeler les uns après les autres, une confirmation d'une entrée de paramètre provoquant, le long du chemin défini, un saut vers l'entrée de paramètre suivante, le mécanisme de commande (1) présentant au moins deux modes de fonctionnement, un changement du mode de fonctionnement par un utilisateur s'effectuant au moyen du sélecteur de mode de fonctionnement, un mouvement manuel du mécanisme de commande étant possible dans un premier mode de fonctionnement, et une entrée de paramètre étant possible dans un deuxième mode de fonctionnement, au moins un changement manuel vers le premier mode de fonctionnement (S8, S13) étant imposé à l'intérieur d'un chemin, un saut n'étant effectué à l'intérieur du chemin prédéterminé que si le changement prédéterminé du mode de fonctionnement (S8, S13) est effectivement effectué, une commutation du sélecteur de mode de fonctionnement confirmant une page d'écran qui impose le changement vers le premier mode de fonctionnement, et le mécanisme de commande étant déplacé dans une position extrême dans le premier mode de fonctionnement, et cette position étant établie comme entrée de paramètre.

2. Procédé selon la revendication 1, **caractérisé en ce qu'**un saut à l'intérieur du chemin dépend de l'entrée de paramètre ou d'une entrée de paramètre antérieure.

3. Procédé selon la revendication 1 ou 2, **caractérisé en ce qu'**un paramètre de fonctionnement est un couple et/ou **en ce qu'**une position extrême est calculée à partir d'un paramètre de fonctionnement entré.

4. Procédé selon l'une des revendications précédentes, **caractérisé en ce qu'**un nombre associé de rotations est calculé pour une différence de deux positions extrêmes, ou la deuxième position extrême est calculée pour une position extrême et un nombre associé de rotations.

5. Procédé selon l'une des revendications précédentes, **caractérisé en ce qu'**un examen de vraisemblance des paramètres de fonctionnement entrés est effectué, étant en particulier vérifié si les positions extrêmes sont inégales et si la ou une différence des positions extrêmes ne dépasse pas un nombre maximal d'incréments.

6. Procédé selon l'une des revendications précédentes, **caractérisé en ce qu'**un parcours de test (S17) est effectué avec les paramètres de fonctionnement entrés, des couples qui apparaissent étant enregistrés et mis en mémoire en tant que valeurs de référence.

7. Mécanisme de commande (1) avec un moteur d'entraînement (2) et une unité de contrôle (4), **caractérisé en ce que** l'unité de contrôle (4) présente au moins un sélecteur de mode de fonctionnement (9), un écran (7) et des touches (8) destinées à l'entrée de paramètres, le mécanisme de commande (1), en particulier une unité de commande (3), étant agencé pour la réalisation d'un procédé selon l'une des revendications précitées.
